# EUROPÄISCHE PATENTANMELDUNG

(11) **EP 0 723 811 A1**
(43) Veröffentlichungstag der Anmeldung: **31.07.1996**
(21) Anmeldenummer: 96100815.8
(22) Anmeldetag: 20.01.1996
(51) Int. Cl.: B01J 37/02, B01J 37/16, B01J 23/40, B01J 23/63, B01D 53/86

(54) **Katalysator zur Entfernung von Wasserstoff und/oder Kohlenmonoxid aus feuchter Luft**

(30) Priorität: 25.01.1995 DE 19502266
(71) Anmelder: Degussa Aktiengesellschaft, D-60311 Frankfurt (DE)
(72) Erfinder: Müller, Herbert, Dr., D-63755 Alzenau (DE); Behl, Walter, D-63776 Mömbris (DE); Hausmann, Ralf, Wächtersbach (DE)

(57) **Zusammenfassung**

Die Erfindung betrifft einen Katalysator zur Entfernung von Wasserstoff und/oder Kohlenmonoxid aus feuchter Luft enthaltend auf einem porösen, anorganischen Träger als katalytisch aktive Komponente mindestens ein Platingruppenmetall in einer Menge von 0,05 bis 5 Gew.-% bezogen auf das Gesamtgewicht des fertigen Katalysators. Der Katalysator ist erhältlich durch Imprägnieren des gegebenenfalls bereits mit einer Alkalisalzlösung vorimprägnierten Trägers mit einer Platingruppenmetallhaltigen Lösung, Trocknen des imprägnierten Trägers, Reduzieren des Platingruppenmetalles durch Behandeln des getrockneten Trägers in einer bis 90°C heißen Lösung eines Reduktionsmittels, Waschen des behandelten Trägers und erneutes Trocknen des so erhaltenen Katalysators bis zur Gewichtskonstanz.

## Beschreibung

Die Erfindung betrifft einen Katalysator zur Entfernung von Wasserstoff und/oder Kohlenmonoxid aus feuchter Luft. Die Erfindung findet ihre Anwendung zum Beispiel bei der Gewinnung von hochreinem Stickstoff für die Elektronik-Industrie oder bei der Entfernung von Kohlenmonoxid aus der Abluft von Straßentunneln. Im Falle der Gewinnung von hochreinem Stickstoff schließt sich an die Entfernung von Wasserstoff und Kohlenmonoxid eine Trennung der Luft in Stickstoff und Sauerstoff durch kryogene Destillation an.

Die französische Patentanmeldung 2 690 357 beschreibt ein Verfahren zur Entfernung von Wasserstoff und Kohlenmonoxid aus Luft zur Gewinnung von hochreinem Stickstoff unter Verwendung eines Katalysators, welcher als katalytisch aktive Komponente auf einem anorganischen Träger wenigstens eines der Metalle ausgewählt aus der Gruppe Kupfer, Platin, Palladium, Osmium, Iridium, Ruthenium, Rhenium und Rhodium enthält. Am Katalysator werden Wasserstoff und Kohlenmonoxid mit dem Sauerstoff der Luft zu Wasser und Kohlendioxid oxidiert. Als mineralisches Trägermaterial wird ein amorphes Aluminiumoxid oder ein hydrophobes Mineral wie zum Beispiel ein hydrophober Zeolith, hydrophobes Siliziumdioxid, α-Aluminiumoxid oder eine oxidische Keramik wie zum Beispiel Zirkoniumdioxid verwendet. Bevorzugt wird amorphes Aluminiumoxid eingesetzt, welches durch Calcination eines kristallinen Aluminiumoxids bei Temperaturen zwischen 560 und 950°C gewonnen wird. Die katalytisch aktiven Komponenten werden durch Imprägnieren auf den kalzinierten Träger aufgebracht. Nach dem Imprägnieren wird die so erhaltene Katalysatorvorstufe erneut bei 500°C in Luft kalziniert und abschließend in einem Gasstrom bestehend aus 10 % Wasserstoff und 90 % Stickstoff reduziert.

Gemäß der französischen Offenlegungsschrift werden mit dem beschriebenen Verfahren Restgehalte an Wasserstoff und Kohlenmonoxid in der gereinigten Luft von unter 10 ppb beziehungsweise unter 5 ppb erhalten.

Ein Problem bei den bekannten Reinigungsverfahren für die Luft ist die Desaktivierung des eingesetzten Katalysators durch den Feuchtigkeitsgehalt der Luft. Die französische Patentschrift gibt zwar an, dieses Problem zu lösen, in dem einzigen Anwendungsbeispiel werden jedoch keine Angaben zum Feuchtigkeitsgehalt der eingesetzten Luft gemacht.

Es ist daher Aufgabe der vorliegenden Erfindung, einen Katalysator für die Reinigung der Luft zur Verfügung zu stellen, welcher eine verbesserte Langzeitstabilität seiner katalytischen Aktivität insbesondere in feuchter Luft aufweist.

Die Aufgabe wird gelöst durch einen Katalysator zur Entfernung von Wasserstoff und/oder Kohlenmonoxid aus feuchter Luft, welcher auf einem porösen, anorganischen Träger als katalytisch aktive Komponente mindestens ein Platingruppenmetall in einer Menge von 0,05 bis 5 Gew.-% bezogen auf das Gesamtgewicht des fertigen Katalysators enthält. Der Katalysator ist erhältlich durch Imprägnieren des Trägers mit einer Platingruppenmetall-haltigen Lösung, Trocknen des imprägnierten Trägers bei erhöhter Temperatur, Reduzieren des Platingruppenmetalles durch Behandeln des getrockneten Trägers in einer bis 90°C heißen, basischen Lösung eines Reduktionsmittels, Waschen des behandelten Trägers bis zur Chlorfreiheit und erneutes Trocknen des so erhaltenen Katalysators bis zur Gewichtskonstanz bei erhöhter Temperatur.

Die porösen anorganischen Träger sollten ein Porenvolumen von bis zu 1 cm³/g aufweisen und eine spezifische Oberfläche (gemessen nach DIN 66132) von wenigstens 5 m²/g aufweisen. Besonders geeignete Materialien sind α-Aluminiumoxid, γ-Aluminiumoxid, Aluminiumsilikate, Zeolithe, Kieselsäure und Titanoxid in seinen verschiedenen Modifikationen. Die Trägermaterialien können verschieden geformt sein. So können kugelförmige Träger mit Durchmessern zwischen 2 und 4 mm eingesetzt werden, aber auch Extrudate beliebiger Form oder wabenförmige Körper. Bevorzugt werden kugel- oder tablettenförmige Körper eingesetzt.

Im einzelnen gestaltet sich die Herstellung der Katalysatoren wie folgt: Die Katalysatorträger werden gegebenenfalls mit einer Alkalisalzlösung vorimprägniert und anschließend getrocknet. Die Vorimprägnierung ist ein wichtiger Schritt, wenn eine bestimmte Edelmetallverteilung, wie zum Beispiel eine schalenartige Verteilung, eingestellt werden soll.

Nach der Vorimprägnierung werden die Träger dann in einer Imprägniertrommel mit der Platingruppenmetall-haltigen Lösung imprägniert. Bevorzugt wird dabei das sogenannte Porenvolumen-Imprägnierverfahren eingesetzt, das heißt die löslichen Vorstufen der Platingruppenmetalle werden in einem Lösungsmittelvolumen, welches dem Porenvolumen der vorgelegten Katalysatorträger entspricht, gelöst und über die Katalysatorträger verteilt. Dadurch ist sichergestellt, daß die gesamte Menge der Lösung von den porösen Trägern aufgenommen wird. Dies ermöglicht eine exakte Einstellung der Beladungsmenge der Katalysatorträger mit den Platingruppenmetallen. Bevorzugt werden wäßrige Lösungen der Vorstufen der Platingruppenmetalle eingesetzt. Als Vorstufen der Platingruppenmetalle kommen Chloride, bevorzugt aber chloridfreie Salze wie Nitrate und andere Salze zum Einsatz.

Nachdem die Platingruppenmetall-Lösung vollständig vom porösen Trägermaterial aufgenommen worden ist, wird das imprägnierte Trägermaterial bei 120°C in der Imprägniertrommel, rotierend im Luftstrom, getrocknet.

Die imprägnierten und getrockneten Katalysatorträger werden anschließend in eine bis zu 90°C heiße Reduktionslösung gegeben. Die Lösung enthält als Reduktionsmittel Natriumformiat und/oder Hydraziniumhydroxid. Es können jedoch auch andere Reduktionsmittel wie Ameisensäure und Natriumborhydrid eingesetzt werden. Ebenso ist die Reduktion in der Gasphase mit Wasserstoff oder Ethylen bei milden Bedingungen bis 200°C möglich.

Im Falle der wäßrigen Reduktion kann das Reduktionspotential der Reduktionslösung durch Ändern ihres pH-Wertes mittels einer Alkalilauge eingestellt werden. Als vorteilhaft hat sich ein pH-Wert der Reduktionslösung von über 9 erwiesen. Nach einer Zeit von etwa 45 Min. werden die so reduzierten Katalysatoren abfiltriert und mit Wasser gewaschen. Werden chloridhaltige Edelmetallsalze verwendet, wird so lange mit Wasser gewaschen, bis im Waschwasser mittels Silbernitrat-Lösung kein Chlorid mehr nachweisbar ist. Die so erhaltenen Katalysatoren werden bei etwa 120°C bis zur Gewichtskonstanz an der Luft getrocknet.

Die erfindungsgemäßen Katalysatoren können zusätzlich als Promotoren noch bis zu 10 Gew.-% Cer und bis zu 2 Gew.-% Zirkon enthalten. Diese Komponenten werden vor dem Aufbringen des Platingruppenmetalles durch Imprägnieren der Träger mit einer wäßrigen Lösung von löslichen Cer- und Zirkonsalzen in die Träger eingebracht.

Eine weitere vorteilhafte katalytisch aktive Komponente für die erfindungsgemäßen Katalysatoren ist Gold in einer Menge von bis zu 10 Gew.-% bezogen auf das Gesamtgewicht des Katalysators. Das Gold kann mittels einer wäßrigen Lösung einer löslichen Goldverbindung gleichzeitig mit dem Platingruppenmetall oder in beliebiger Reihenfolge zum Platingruppenmetall durch Imprägnieren in die Träger eingebracht werden. Zusätzlich zu Gold kann als weitere Komponente Silber in den Katalysator eingebracht werden, wobei die Gesamtmenge an Gold und/oder Silber bis zu 10 Gew.-% des Gesamtgewichtes betragen kann. Silber wird vorteilhafterweise mittels einer Silbernitratlösung eingebracht.

Die Herstellung der erfindungsgemäßen Katalysatoren wird im folgenden anhand von verschiedenen Herstellungsbeispielen erläutert.

In den folgenden Beispielen kamen neben γ-Aluminiumoxid und Titanoxid drei verschiedene Qualitäten von γ-Aluminiumoxid zum Einsatz. Die Eigenschaften dieser Trägermaterialien sind in der folgenden Tabelle 1 aufgelistet.

**Tabelle 1**

| Trägermaterialien | | | | |
|---|---|---|---|---|
| Trägerbezeichng. | Form | Rütteldichte [g/l] | spez. Oberfläche [m²/g] | Porenvolumen*) [ml/g] |
| α-Al₂O₃ | Kugeln 2 - 4 mm | 820 | 8 | 0,40 |
| γ-Al₂O₃ I | Kugeln 2 - 4 mm | 7000 | 230 | 0,42 |
| γ-Al₂O₃ II | Kugeln 2 - 4 mm | 590 | 100 | 0,81 |
| γ-Al₂O₃ III | Kugeln 2 - 5 mm | 790 | 280 | 0,46 |
| TiO₂ I (Anatas) | Kugeln 3 mm | 780 | 95 | 0,32 |
| TiO₂ II (Anatas) | Extrudate ⌀ 3mm | 915 | 145 | 0,35 |
| TiO₂ III (Anatas) | Extrudate ⌀ 1,6mm | 850 | 150 | 0,35 |

| | | | | |
|---|---|---|---|---|
| *) bestimmt als Wasseraufnahmekapazität | | | | |

### Beispiel 1

Es wurden 1000 g eines Palladiumkatalysators auf α-Al₂O₃ hergestellt.

995 g des Trägermaterials wurden in einer Imprägniertrommel mit 400 ml einer Palladium-haltigen Lösung imprägniert. Die Edelmetall-Lösung wurde durch Verdünnen von 25 g einer 20 %igen Palladiumchloridlösung, entsprechend 5 g Palladium, mit vollentsalztem Wasser (VE-Wasser), hergestellt. Der pH-Wert der Lösung wurde mit 10 %iger Natriumcarbonat-Lösung auf den Wert 6 eingestellt.

Nachdem die Edelmetall-Lösung vollständig vom porösen Trägermaterial aufgenommen war, wurde es bei 120°C in der Imprägniertrommel im Luftstrom getrocknet.

Das Palladiumchlorid auf dem Aluminiumoxidträgermaterial wurde anschließend reduziert. Die Reduktionslösung bestand aus 4 l einer wäßrigen Lösung von 19 g Natriumformiat, 3,6 g Natriumhydroxid und 3 ml einer 25 %igen Hydraziniumhydroxid-Lösung. Die Lösung wurde während der Reduktionsdauer von 45 Min. auf einer Temperatur von 80°C gehalten. Der reduzierte Katalysator wurde abfiltriert und mit vollentsalztem Wasser gewaschen, bis im Filtrat mittels Silbernitrat-Lösung kein Chlorid mehr nachweisbar war.

Der gewaschene Katalysator wurde bei 120°C bis zur Gewichtskonstanz an der Luft getrocknet. Der trockne Katalysator enthielt 0,5 Gew.-% Palladium, welches im wesentlichen homogen über die Katalysatorpartikel verteilt war.

### Beispiel 2

Es wurden 1000 g eines Palladiumkatalysators auf γ-Al₂O₃ I wie schon in Beispiel 1 beschrieben hergestellt. Aufgrund des höheren Porenvolumens von γ-Al₂O₃ I gegenüber dem in Beispiel 1 verwendeten α-Al₂O₃, wurde die Edelmetall-Lösung auf ein Volumen von 420 ml mit VE-Wasser verdünnt.

Der resultierende, getrocknete Katalysator enthielt 0,5 Gew.-% Palladium, welches über eine oberflächliche Schale von etwa 0,3 mm Dicke verteilt war.

### Beispiel 3

Es wurden 1000 g eines Palladium-Katalysators auf γ-Al₂O₃ III analog zu den vorangegangenen Beispielen hergestellt. Im Unterschied zu Beispiel 2 wurde als Palladiumvorstufe nicht Palladiumchlorid, sondern Palladiumnitrat verwendet. Die zum Imprägnieren eingesetzte Edelmetall-Lösung enthielt daher 25 g einer 20 %igen Palladiumnitrat-Lösung, entsprechend 5 g Palladium. Das Volumen der Lösung wurde wegen des von γ-Al₂O₃ I abweichenden Porenvolumen auf 460 ml verdünnt. Eine Überprüfung des Waschwassers auf Chloridgehalt erübrigte sich hierbei.

### Beispiel 4

Es wurden wie in Beispiel 3 1000 g eines Palladium-Katalysators auf γ-Al₂O₃ III mit einem Gehalt an Palladium von 1 Gew.-% bezogen auf das Gesamtgewicht des Katalysators hergestellt. Zur Verdoppelung des Edelmetall-Gehaltes enthielt die Imprägnierlösung von 460 ml 50 g einer 20 Gew.-%igen Palladiumnitrat-Lösung, entsprechend 10 g Palladium. Die Mengen des in der Reduktionslösung enthaltenen Natriumhydroxids, Natriumformiats und Hydraziniumhydroxids wurden ebenfalls verdoppelt.

### Beispiel 5

Es wurden wie in Beispiel 3 1000 g eines Palladium-Katalysators auf γ-Al₂O₃ III mit einem Gehalt an Palladium von 2 Gew.-% Palladium bezogen auf das Gesamtgewicht des Katalysators hergestellt. Hierzu enthielt die Imprägnierlösung von 460 ml 100 g einer 20 %igen Palladiumnitrat-Lösung, entsprechend 20 g Palladium. Auch die Mengen von Natriumhydroxid, Natriumformiat und Hydraziniumhydroxid in der Reduktionslösung wurden gegenüber Beispiel 1 vervierfacht.

### Beispiel 6

Zur Herstellung eines mit Cer promotierten Palladium-Katalysators wurden zunächst 1000 g γ-Al₂O₃ II in einer Imprägniertrommel mit 810 ml einer Lösung imprägniert, die 7,02 Gew.-% Ce als Ceracetat enthielt.

Nachdem die Lösung vollständig vom Trägermaterial aufgenommen worden war, wurden die Kugeln bei 120°C in der Imprägniertrommel rotierend im Luftstrom getrocknet. Das getrocknete Material wurde drei Stunden bei 650°C kalziniert.

995 g der imprägnierten und kalzinierten Aluminiumoxidkugeln wurden dann mit 680 ml einer Palladium-haltigen Lösung imprägniert. Die Edelmetall-Lösung enthielt 25 g einer 20 %igen Palladiumnitrat-Lösung (entsprechend 5 g Pd).

Trocknen, Reduzieren und Waschen des Katalysators wurden wie in Beispiel 3 beschrieben vorgenommen.

Der fertige Katalysator enthielt 0,5 Gew.-% Palladium und 2,83 Gew.-% Cer.

### Beispiel 7

Es wurden 1000 g eines Palladium, Gold und Cer auf γ-Al₂O₃ II enthaltenden Katalysators hergestellt.

Die Einbringung der Cer-Komponente in den Träger wurde wie in Beispiel 6 vorgenommen. Danach wurden 990 g dieses vorimprägnierten Katalysatorträgers in einer Imprägniertrommel mit 680 ml einer Palladium/Gold-haltigen Lösung imprägniert. Die Lösung enthielt 25 g einer 20 %igen Palladiumnitrat-Lösung, entsprechend 5 g Palladium, sowie 10 g Tetrachlorogold(III)säurehydrat, entsprechend 5 g Gold.

Nachdem die Edelmetall-Lösung vollständig vom porösen Trägermaterial aufgenommen war, wurde das imprägnierte Aluminiumoxid bei 120°C in der Imprägnier-Trommel im Luftstrom getrocknet. Zur Reduktion der Edelmetall-Verbindungen wurde das imprägnierte und getrocknete Trägermaterial in 4 l einer 80°C haltigen Lösung gegeben, die 9 g Natriumhydroxid, 47,5 Natriumformiat und 7,5 ml einer 25 %igen Hydraziniumhydroxid-Lösung enthielt. Die weitere Verarbeitung des Katalysators erfolgte wie in Beispiel 1.

Der fertige Katalysator enthielt 0,5 Gew.-% Palladium, 0,5 Gew.-% Gold und 2,82 Gew.-% Cer.

### Beispiel 8

Es wurden 1000 g eines Palladium-Katalysators auf TiO₂ I mit einem Gehalt von 0,25 Gew.-% Palladium hergestellt.

997,5 g des TiO₂ I wurden in einer Imprägnier-Trommel mit 320 ml einer 10 %igen Natriumcarbonat-Lösung imprägniert und bei 120°C getrocknet. Danach wurden die vorbelegten Kugeln mit 320 ml einer Palladium-haltigen Lösung imprägniert. Diese Lösung enthielt 12,5 g einer 20 %igen Palladiumnitrat-Lösung, entsprechend 2,5 g Palladium.

Trocknen, Reduzieren, Waschen und erneutes Trocknen des Katalysators wurden wie in Beispiel 1 vorgenommen, wobei beim Reduzieren entsprechend dem halbierten Palladiumgehalt die Mengen von Natriumhydroxid, Natriumformiat und Hydraziniumhydroxid in der Reduktionslösung entsprechend halbiert wurden.

### Beispiel 9

Es wurden 1000 g eines Palladium-Katalysators auf TiO₂ I mit einem Gehalt von 0,5 Gew.-% Palladium hergestellt.

Die Vorimprägnierung des Titanoxidträgers mit Natriumcarbonat wurde wie in Beispiel 8 vorgenommen. Ebenso die Imprägnierung mit der Palladium-haltigen Lösung, mit dem Unterschied, daß die Konzentration der Imprägnierlösung an Palladiumnitrat verdoppelt wurde.

Die weitere Präparation des Katalysators erfolgte wie schon in Beispiel 1 beschrieben.

Der getrocknete Katalysator enthielt 0,5 Gew.-% Palladium bezogen auf das Gesamtgewicht des Katalysators.

### Beispiel 10

Es wurden 1000 g eines Palladium-Katalysators auf TiO₂ I mit 1 Gew.-% Palladium hergestellt. Die Präparation des Katalysators wurde entsprechend dem Beispiel 9 vorgenommen, wobei die Mengen der verwendeten Einsatzstoffe Palladiumnitrat, Natriumhydroxid, Natriumformiat und Hydraziniumhydroxid der gewünschten Beladung des Katalysators mit Palladium angepaßt wurden.

### Beispiel 11

Es wurden 1000 g eines Palladium/Gold-Katalysators auf TiO₂ I mit 0,25 Gew.-% Palladium und 0,25 Gew.-% Gold hergestellt. Die Herstellung des Katalysators folgte sinngemäß Beispiel 7. Der Träger wurde jedoch nicht mit Cer imprägniert, sondern gemäß Beispiel 8 mit einer 10 %igen Natriumcarbonat-Lösung getränkt. Als Vorstufen für Palladium und Gold wurden wieder Palladiumnitrat und Tetrachlorogold(III)säurehydrat verwendet. Die verwendeten Mengen von Palladiumnitrat, Tetrachlorogold(III)säurehydrat sowie von Natriumhydroxid, Natriumformiat und Hydraziniumhydroxid wurden gegenüber Beispiel 7 halbiert.

### Beispiel 12

Es wurden 1000 g eines Palladium/Gold-Katalysators auf TiO₂ II mit 0,5 Gew.-% Pd und 0,5 Gew.-% Au analog zu Beispiel 11 mit den doppelten Mengen an Palladiumnitrat, Tetrachlorogold(III)säurehydrat, Natriumhydroxid, Natriumformiat und Hydraziniumhydroxid hergestellt. Aufgrund des höheren Porenvolumens von TiO₂II gegenüber dem in Beispiel 11 verwendeten TiO₂I wurde mit 340 ml Natriumcarbonat-Lösung beziehungsweise Edelmetall-Lösung gearbeitet.

Die folgende Tabelle 2 gibt eine Zusammenstellung der Zusammensetzung der in den Beispielen hergestellten Katalysatoren.

### Beispiel 13

Es wurden 1000 g eines Palladium/Silber-Katalysators auf TiO₂III mit 0,5 % Gew.-% Palladium und 5 Gew.-% Silber hergestellt.

945 g des TiO₂III wurden in einer Imprägniertrommel mit 340 ml einer 1 %igen Natriumcarbonat-Lösung imprägniert und bei 120°C getrocknet. Danach erfolgte die Imprägnierung der vorbelegten Extrudate mit 370 ml einer Palladium/Silberhaltigen Lösung. Diese Lösung enthielt 25,28 g einer 19,78 %igen Palladiumnitrat-Lösung, entsprechend 5 g Palladium sowie 78,75 g Silbernitrat, entsprechend 50 g Silber. Der imprägnierte Träger wurde bei 105°C getrocknet und das enthaltende Edelmetall in einem Wasserstoff/Stickstoff-Strom bei 150°C 3 Stunden lang reduziert. Der so erhaltene Katalysator wurde mit vollentsalztem Wasser gewaschen, bis der Leitfähigkeitswert des Filtrates dem des Waschwassers entsprach und anschließend bei 120°C an der Luft bis zur Gewichts-Konstanz getrocknet.

Der fertige Katalysator enthielt nach der Trocknung 0,5 Gew.-% Palladium und 5 Gew.-% Silber. Das Edelmetall war an der Oberfläche der Formkörper bis zu einer Eindringtiefe von 0,3 mm angereichert.

**Tabelle 2**

| Beispiel | Träger | Edelmetall | Promotoren |
|---|---|---|---|
| 1 | α-Al₂O₃ | 0,5 Pd | - |
| 2 | γ-Al₂O₃ I | 0,5 Pd | - |
| 3 | γ-Al₂O₃ III | 0,5 Pd | - |
| 4 | " | 1,0 Pd | - |
| 5 | " | 2,0 Pd | - |
| 6 | γ-Al₂O₃ II | 0,5 Pd | 2,83 Ce |
| 7 | γ-Al₂O₃ II | 0,5 Pd/0,5 Au | 2,82 Ce |
| 8 | TiO₂ I | 0,25 Pd | - |
| 9 | " | 0,5 Pd | - |
| 10 | " | 1,0 Pd | - |
| 11 | " | 0,25 Pd/0,25Au | - |
| 12 | TiO₂ II | 0,5 Pd/0,5 Au | - |
| 13 | TiO₂III | 0,5 Pd/5 Ag | - |

## Patentansprüche

1. Katalysator zur Entfernung von Wasserstoff und/oder Kohlenmonoxid aus feuchter Luft enthaltend auf einem porösen, anorganischen Träger als katalytisch aktive Komponente mindestens ein Platingruppenmetall in einer Menge von 0,05 bis 5 Gew.-% bezogen auf das Gesamtgewicht des fertigen Katalysators,
**erhältlich durch**
Imprägnieren des gegebenenfalls bereits mit einer Alkalisalzlösung vorimprägnierten Trägers mit einer Platingruppenmetallhaltigen Lösung, Trocknen des imprägnierten Trägers, Reduzieren des Platingruppenmetalles durch Behandeln des getrockneten Trägers in einer bis 90°C heißen Lösung eines Reduktionsmittels, Waschen des behandelten Trägers und erneutes Trocknen des so erhaltenen Katalysators bis zur Gewichtskonstanz.

2. Katalysator nach Anspruch 1,
**dadurch gekennzeichnet**,
daß als Trägermaterial Aluminiumoxid, Titanoxid, Aluminiumsilikate, Zeolithe oder Kieselsäure, und als Platingruppenmetall Palladium verwendet werden, wobei das Palladium in einer Menge von bis zu 5 Gew.-% bezogen auf das Gesamtgewicht des Katalysators vorliegt.

3. Katalysator nach Anspruch 2,
**dadurch gekennzeichnet**,
daß der Träger vor dem Aufbringen des Palladiums mit einer Cer-haltigen Lösung imprägniert und getrocknet wird, so daß der fertige Katalysator bis zu 15 Gew.-% Cer enthält.

4. Katalysator nach einem der Ansprüche 1 bis 3,
**dadurch gekennzeichnet**,
daß der Träger zusätzlich mit einer goldhaltigen und gegebenenfalls silberhaltigen Lösung gleichzeitig mit dem Platingruppenmetall oder in beliebiger Reihenfolge imprägniert wird, so daß der fertige Katalysator bis zu 10 Gew.-% Gold und/oder Silber enthält.
